# EUROPEAN PATENT APPLICATION

(11) **EP 4 675 570 A1**
(43) Date of publication of application: **07.01.2026**
(21) Application number: 25185111.9
(22) Date of filing: 25.06.2025
(51) Int. Cl.: G06V 10/48, G06V 10/82, G06V 20/52

(54) **INFORMATION PROCESSING PROGRAM, INFORMATION PROCESSING METHOD, INFORMATION PROCESSING DEVICE**

(30) Priority: 03.07.2024 JP 2024107742
(71) Applicant: FUJITSU LIMITED, Kawasaki-shi, Kanagawa 211-8588 (JP); Kyushu University, National University Corporation, Nishi-ku Fukuoka-shi Fukuoka 819-0395 (JP)
(72) Inventor: Kamiyama, Naoyuki, Fukuoka-shi, Fukuoka, 819-0395 (JP); Kaji, Shizuo, Fukuoka-shi, Fukuoka, 819-0395 (JP); Yamada, Hiroaki, Kawasaki-shi, Kanagawa, 211-8588 (JP); Kato, Takashi, Kawasaki-shi, Kanagawa, 211-8588 (JP)
(74) Representative: Hoffmann Eitle

(57) **Abstract**

An information processing program causes a computer to execute a process, the process including: obtaining a plurality of position data indicating positions of moving objects on an area of interest at different time points; generating first feature amount data representing spatial features on the area, the first feature amount data corresponding to a diagram generated by topological data analysis based on the obtained plurality of position data, the diagram representing a timing at which each of one or more different types of shapes that are formable by a combination of the positions of the moving objects on the area appears and disappears depending on a change in resolution; and learning, based on the generated first feature amount data, a model that outputs a result of analyzing a danger brought about by a congested state on the area according to input feature amount data representing the spatial features on the area.

## Description

### FIELD OF THE INVENTION

Embodiments discussed herein related to an information processing program, an information processing method, and an information processing device.

### BACKGROUND OF THE INVENTION

In the past, to prevent crowd accidents, there is a technique that, when the density of people in a specific place exceeds a threshold, determines that dangerous congestion easily inducing a crowd accident has occurred and warns that the probability of a crowd accident occurring is above a certain level.

As a prior art, for example, there is a technique that generates a congestion degree in a railway vehicle based on an image from a camera disposed in the vehicle, generates multiple types of congestion information having a hierarchical relationship based on the generated congestion degree, and transmits the information according to the type of display unit (for example, refer to, Japanese Laid-Open Patent Publication No. 2023-079602).

### SUMMARY OF THE INVENTION

It is an object in one aspect of the embodiments to at least solve the above problems in the conventional technologies.

According to an aspect of an embodiment, an information processing program causes a computer to execute a process, the process including: obtaining a plurality of position data indicating positions of moving objects on an area of interest at different time points; generating first feature amount data representing spatial features on the area, the first feature amount data corresponding to a diagram generated by topological data analysis based on the obtained plurality of position data, the diagram representing a timing at which each of one or more different types of shapes that are formable by a combination of the positions of the moving objects on the area appears and disappears depending on a change in resolution; and learning, based on the generated first feature amount data, a model that outputs a result of analyzing a danger brought about by a congested state on the area according to input feature amount data representing the spatial features on the area.

An object and advantages of the invention will be realized and attained by means of the elements and combinations particularly pointed out in the claims.

It is to be understood that both the foregoing general description and the following detailed description are exemplary and explanatory and are not restrictive of the invention.

### BRIEF DESCRIPTION OF DRAWINGS

Fig. 1 is an explanatory view depicting one example of an information processing method according to an embodiment.
Fig. 2 is an explanatory view depicting an example of an information processing system 200.
Fig. 3 is a block diagram depicting an example of a hardware configuration of an information processing device 100.
Fig. 4 is a block diagram depicting an example of a hardware configuration of an imaging device 201.
Fig. 5 is a block diagram depicting an example of a functional configuration of the information processing device 100.
Fig. 6 is an explanatory view depicting an example of operation of the information processing device 100.
Fig. 7 is an explanatory view depicting an example of operation of the information processing device 100.
Fig. 8 is an explanatory view depicting an example of operation of the information processing device 100.
Fig. 9 is an explanatory view depicting an example of operation of the information processing device 100.
Fig. 10 is an explanatory view depicting an example of operation of the information processing device 100.
Fig. 11 is an explanatory view depicting an example of operation of the information processing device 100.
Fig. 12 is an explanatory view depicting an example of operation of the information processing device 100.
Fig. 13 is an explanatory view depicting a specific example of the operation of the information processing device 100.
Fig. 14 is an explanatory view depicting a specific example of the operation of the information processing device 100.
Fig. 15 is an explanatory view depicting an example of an output screen.
Fig. 16 is a flowchart depicting an example of an overall processing procedure.

### DESCRIPTION OF THE INVENTION

First, problems associated with the conventional techniques are discussed. With the prior art, it is difficult to properly determine that dangerous congestion that is likely to cause a crowd accident has occurred. For example, even when a particular place has a regular flow of people and is unlikely to cause a crowd accident, if the density of people in the particular place exceeds a threshold, it will be erroneously determined that dangerous congestion easily inducing a crowd accident has occurred.

Embodiments of a recording medium/information processing program, an information processing method, and an information processing device according to the present invention are described in detail with reference to the accompanying drawings.

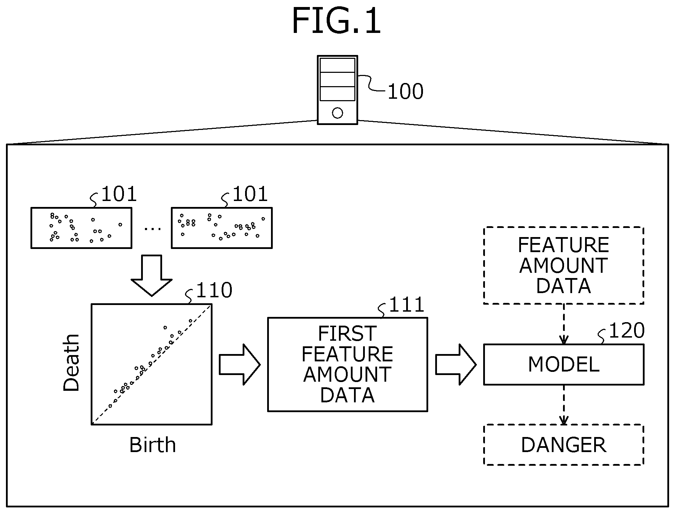

Fig. 1 is an explanatory view depicting one example of an information processing method according to an embodiment. The information processing device 100 is a computer for facilitating proper determination of an occurrence of dangerous congestion that easily causes a crowd accident. The information processing device 100 is, for example, a server or a personal computer (PC).

Congestion is a state where the density indicated by the number of people per unit area is equal to or greater than a certain level. A crowd accident is an event that can occur in a specific location due to congestion caused by the presence of a narrow passage, an obstacle, or the like or by people gathering due to an event being held. In a crowd accident, a group of people may fall on top of each other, or a person may be crushed, resulting in a casualty. A specific location is, for example, a public space where people gather. A public space is, for example, a stadium, a station, or a downtown area.

For example, crowd accidents occurred at the Akashi Fireworks Festival pedestrian bridge on July 21, 2001, the Kanjuruhan Stadium on October 1, 2022, and Itaewon on October 29, 2022.

For this reason, it is desirable to prevent crowd accidents. For example, to prevent crowd accidents, it is desirable to determine whether dangerous congestion that leads to a crowd accident has occurred. Dangerous congestion is congestion in a state in which a crowd accident is likely to occur. Dangerous congestion is, for example, congestion in a state in which the flow of people is disrupted. When the flow of people is disrupted, a distance that can normally be traveled in 10 minutes may take several hours. For example, it is desirable to determine whether dangerous congestion that leads to a crowd accident has occurred in a public space, detect the occurrence of dangerous congestion early, and take measures at an early stage to deal with the dangerous congestion that has occurred.

Thus, for example, a first method is conceivable in which dangerous congestion is determined to have occurred when the density of people in a specific location exceeds a first threshold. The density is, for example, a value obtained by dividing the number of people in a specific location by the area of the specific location. For example, in the first method, when it is determined that dangerous congestion has occurred, it is possible to issue a warning indicating that dangerous congestion has occurred to a manager who manages the safety of the specific location or a worker who actually manages the flow of people in the specific location. Here, for the first method, reference can be made to, for example, "General Theory of Crowd Management - Theory and Practice -", by Crowd Management Study Group, Department of Social Collaboration, University of Tokyo (2020), University of Tokyo Press.

In the first method, however, it is difficult to properly determine that dangerous congestion has occurred. For example, if a specific location is a relatively large space or has a relatively complex shape, the density of people in the specific location is not uniform, making it difficult to determine that dangerous congestion has occurred. In fact, public spaces where people gather tend to be relatively large spaces or have relatively complex shapes. For example, even when dangerous congestion occurs in a part of a specific location, the density of people in the entire specific location may not exceed the first threshold, and it may be erroneously determined that dangerous congestion does not occur.

Here, in addition to dangerous congestion, it is considered that there may be safe congestion in which a crowd accident is unlikely to occur. Safe congestion is congestion in which the flow of people is not disrupted and is in a regular state. Safe congestion is, for example, congestion in which the probability of a crowd accident occurring does not exceed a certain level even when the density of people is relatively high because the flow of people is smooth. Safe congestion is, for example congestion at a station during normal commuting hours.

In contrast, the first method cannot distinguish between dangerous congestion and safe congestion and cannot properly determine whether dangerous congestion has occurred. For example, the first method may erroneously determine that dangerous congestion has occurred when the density of people in a specific location exceeds the first threshold, even when the flow of people is smooth, dangerous congestion has not occurred, and a crowd accident is unlikely to occur in the specific location.

Thus, it is conceivable that warnings are issued to the above-mentioned manager or the above-mentioned worker with excessive frequency. As a result, it is conceivable that the manager or the worker is subjected to an increase in physical and/or psychological workload. It is also conceivable that the above-mentioned manager or the above-mentioned worker is induced to enter a psychological state in which the manager or the worker disregards the warnings. It is conceivable that this makes it difficult to prevent crowd accidents.

Meanwhile, in addition to the first method, a second method is conceivable in which, based on an image taken of a specific place, the speed of the flow of people is calculated by identifying individuals and tracking the movement of people in a specific place, and when the calculated speed is equal to or less than a second threshold, it is determined that dangerous congestion has occurred. Tracking the movement of people based on an image is called object tracking.

Even with the second method, it is difficult to properly determine that dangerous congestion has occurred. For example, it is difficult to identify individuals and accurately track the movement of people in a specific place, based on an image taken of the specific place and thus, it is difficult to properly determine that dangerous congestion has occurred. For example, this may lead to an increase in the processing time or processing load required to accurately track the movement of people.

Thus, in this embodiment, an information processing method that can facilitate proper determination of the occurrence of dangerous congestion is described. According to this information processing method, for example, dangerous congestion and safe congestion can be distinguished from each other, and it is possible to properly determine whether dangerous congestion has occurred in an area of interest.

In Fig. 1, there is an area of interest for which it is to be determined whether dangerous congestion has occurred. The area of interest is an area in which multiple moving objects are present. The moving objects are, for example, people. The area of interest is, for example, an area in which multiple people are present. For example, the area of interest is a public space where people gather. The public space is, for example, a stadium, a station, or a downtown area. The information processing device 100 may store, for example, information that identifies areas of interest.

(1-1) The information processing device 100 obtains multiple position data 101. The multiple position data 101 indicate the positions of the people in the area of interest at different times. Here, a combination of people on the area of interest at a first time point and a combination of people on the area of interest at a second time point may be completely identical, may partially overlapped, or may be completely different. The position data 101 indicates the position of each of one or more people on the area of interest, for example, without identifying individuals.

Here, the position data 101, for example, preferably indicates the position of each of one or more people who actually are present on the area of interest. On the other hand, the position data 101, for example, may be virtual data indicating the position of each of one or more people assumed to be present on the area of interest. In this case, the information processing device 100, for example, obtains the position data 101 indicating the position of each person on the area of interest, obtained by a simulator. Here, the information processing device 100, for example, utilizes Agent Based Simulation.

(1-2) The information processing device 100 generates a diagram 110 based on the obtained multiple position data 101, by topological data analysis. The diagram 110 represents the timing at which one or more different shapes appear and disappear depending on a change in resolution. Each shape is a shape that can be formed by a combination of people's positions on the area of interest. The one or more shapes include, for example, at least one of a connected shape, a ring shape, and a hollow shape. A ring is a shape that exists on a two-dimensional plane. A hollow shape is, for example, a shape that exists in a three-dimensional space. The resolution indicates how large the position of a person is to be. For example, the diagram 110 is a persistence diagram (PD).

The information processing device 100 generates first feature amount data 111 corresponding to the generated diagram 110. The first feature amount data 111 represents spatial features on the area of interest. The information processing device 100 generates a feature vector that becomes the first feature amount data 111, based on the diagram 110. For example, the first feature amount data 111 is a feature vector based on a persistence image (PI). For example, the first feature amount data 111 may be the PI itself.

(1-3) The information processing device 100 learns a model 120 based on the generated first feature amount data 111. The model 120 has a function of outputting a result of analyzing the danger due to the crowded state in the area of interest according to the input feature amount data representing the spatial features of the area of interest. The model 120 is, for example, a neural network. The model 120 may be a formula for classifying the presence or absence of danger due to the crowded state into two clusters. The information processing device 100 learns the model 120 by supervised learning or unsupervised learning based on the generated first feature amount data 111. This allows the information processing device 100 to learn the model 120 that can properly determine whether dangerous congestion has occurred.

The information processing device 100 can learn the model 120, which can properly determine whether dangerous congestion has occurred by distinguishing between dangerous congestion and safe congestion, for example. For example, through the diagram 110, the information processing device 100 can learn the model 120, which reflects spatial features in a case where dangerous congestion occurs and reflects the tendency for the spatial features to continue. Thus, for example, the information processing device 100 can learn the model 120, which determines whether dangerous congestion has occurred from a combination of positions of people on an area of interest, without using the density of people on the area of interest.

Also, the information processing device 100 can learn the model 120, which can properly determine whether dangerous congestion has occurred only from position information of people at each time point, for example, through the diagram 110, without identifying individuals and without tracking the movement of people in the area of interest. Thus, the information processing device 100 can avoid an increase in processing time or processing load for tracking the movement of people in the area of interest when determining whether dangerous congestion has occurred.

Here, while a case has been described in which the functions of the information processing device 100 are implemented by a single computer, configuration is not limited hereto. For example, the functions of the information processing device 100 may be implemented by cooperation of multiple computers. For example, the function of the information processing device 100 may be implemented on a cloud.

Here, while a case has been described where the moving object is a person, this is not limiting. For example, the moving object may be a ship, a vehicle, an airplane, a drone, or the like. For example, when the moving object is a ship, it is conceivable that dangerous congestion of ships may occur in an area of interest such as a port having a relatively complex shape. In this case, the information processing device 100 can properly determine whether dangerous congestion of ships has occurred.

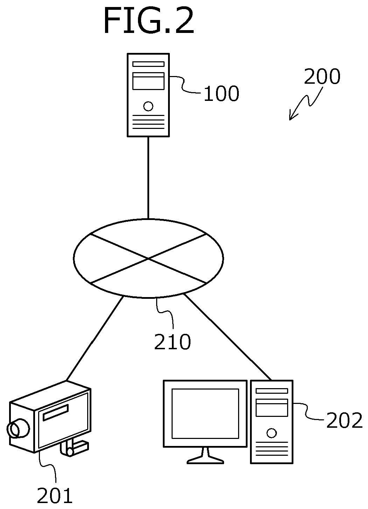

Next, with reference to Fig. 2, an example of an information processing system 200 is described to which the information processing device 100 depicted in Fig. 1 is applied.

Fig. 2 is an explanatory view depicting an example of the information processing system 200. In Fig. 2, the information processing system 200 includes the information processing device 100, one or more image capture devices 201, and one or more client devices 202.

In the information processing system 200, the information processing device 100 and the image capture device 201 are connected via a wired or wireless network 210. The network 210 is, for example, a local area network (LAN), a wide area network (WAN), the Internet, or the like. The information processing device 100 and the client device 202 are connected via a wired or wireless network 210.

The imaging device 201 is a computer that captures an image of an area of interest for determining whether dangerous congestion has occurred. For example, one or more imaging devices 201 are associated with different areas. The imaging device 201 captures an image of the area corresponding to the imaging device 201 itself at each time point, thereby generating an image of the area corresponding to the imaging device 201 itself. The imaging device 201 generates position data indicating the position of each person in the area corresponding to the imaging device 201 itself by analyzing the generated image at each time point. The imaging device 201 transmits the generated position data to the information processing device 100 at each time point. The imaging device 201 is, for example, a fixed camera. The imaging device 201 may be, for example, a drone. The imaging device 201 may be, for example, a smartphone.

The information processing device 100 is a computer for facilitating proper determination of the occurrence of dangerous congestion in a specific area. The information processing device 100 stores a position data set that compiles multiple position data corresponding to different time points within a period for each of one or more areas in multiple periods. The position data indicates the position of each person in any of the areas. The position data may indicate the position of each person in any of the areas without identifying individuals, for example.

The information processing device 100 obtains the position data, for example, by receiving the position data from the imaging device 201. The information processing device 100 may obtain the position data, for example, by receiving an input of the position data. The information processing device 100 stores, for example, a position data set that compiles multiple position data corresponding to different time points within a period of multiple periods, for each of one or more areas, based on the obtained position data.

The information processing device 100 generates a PD for each period based on a position data set for each period for each area. The information processing device 100 generates a PI for each period based on the PD for each period generated for each area. The information processing device 100 generates a feature vector for each period based on the PI for each period generated for each area. The information processing device 100 learns a model that implements a function of outputting the presence or absence of danger due to the congested state of the area based on the feature vector generated for each period, for each area.

The information processing device 100 stores a position data set that summarizes multiple position data corresponding to different points in time within a predetermined period, for each area. The information processing device 100 obtains the position data by, for example, receiving the position data from the imaging device 201. The information processing device 100 may obtain the position data by, for example, receiving an input of the position data. The information processing device 100 stores a position data set that summarizes multiple position data corresponding to different points in time within a predetermined period for each area based on the obtained position data.

The information processing device 100 generates a PD for a predetermined period for each area based on a position data set for the predetermined period. The information processing device 100 generates a PI for a predetermined period for each area based on the generated PD for the predetermined period. The information processing device 100 generates a feature vector for a predetermined period based on the generated PI for the predetermined period for each area.

The information processing device 100 uses a learned model based on the generated feature vector for each area for the predetermined period to generate and output information indicating the presence or absence of danger due to congestion in each area during a predetermined period. The output format is, for example, display on a display, print out on a printer, transmission to another computer, or storage in a storage area.

The information processing device 100 transmits information indicating the presence or absence of danger due to congestion in each area during a predetermined period to another computer. The other computer is, for example, the client device 202. The information processing device 100 may output, for example, the presence or absence of danger due to congestion in each area during a predetermined period so that the user can refer to it. The user is, for example, a manager who manages the safety in each area. The information processing device 100 is, for example, a server or a PC.

The client device 202 is a computer that outputs information indicating the presence or absence of danger due to congestion in each area for a predetermined period of time, for each area. The client device 202 is used, for example, by a manager who manages the safety in each area, or a worker who actually manages the flow of people in each area. The client device 202 receives information indicating the presence or absence of danger due to congestion in each area for a predetermined period of time from the information processing device 100.

The client device 202 outputs information indicating the presence or absence of danger due to congestion in each area for a predetermined period of time so that the user can refer to it. For example, the client device 202 may output a warning indicating the presence of danger due to congestion for an area that, of multiple areas, is in danger due to congestion. This makes it easier for the client device 202 to manage the safety in each area. The client device 202 is, for example, a PC, a tablet terminal, a smartphone, or a wearable terminal.

Here, while a case where position data indicating the position of each person in the area is generated by analyzing an image of the area has been described, this is not limited hereto. For example, the position data may be generated based on the measurement values of various sensors such as an infrared sensor or a weight sensor, instead of an image. Also, for example, the position data may be generated by detecting a device held by each person in the area. The device may be, for example, a smartphone or a wearable terminal. The device may be, for example, an IC tag.

Here, while a case where the information processing device 100 is a device different from the imaging device 201 has been described, this is not limited hereto. For example, the information processing device 100 may have a function as the imaging device 201 and may also operate as the imaging device 201. In this case, the information processing system 200 may not omit the imaging device 201. Also, while a case where the information processing device 100 is a device different from the client device 202 has been described, this is not limited hereto. For example, the information processing device 100 may have a function as the client device 202 and may also operate as the client device 202. In this case, the information processing system 200 may not omit the client device 202.

Next, an application example of the information processing system 200 is described. The information processing system 200 may be applied to, for example, a case where each partial space forming a public space in which people gather is set as an area of interest and whether dangerous congestion has occurred in each partial space is determined.

For example, when the information processing system 200 determines that dangerous congestion has occurred in any partial space, it may issue an alarm to a manager who manages safety in the public space, or a worker who actually manages the flow of people in any partial space. This allows the information processing system 200 to easily discover dangerous congestion in a public space early in real time, to easily prevent crowd accidents, and to easily ensure safety.

For example, the information processing system 200 may determine whether dangerous congestion has occurred in each partial space for each past time period and analyze in which partial space dangerous congestion is likely to occur during what time period. This enables the information processing system 200 to easily grasp what time periods are likely to cause dangerous congestion in public spaces and makes it easier to take measures against crowd accidents.

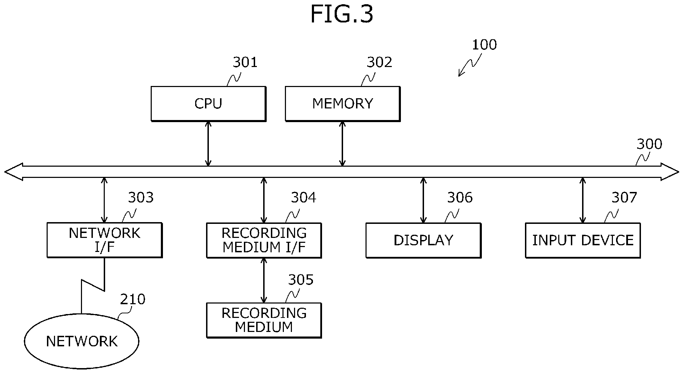

Next, an example of a hardware configuration of the information processing device 100 is described with reference to Fig. 3.

Fig. 3 is a block diagram depicting an example of a hardware configuration of the information processing device 100. In Fig. 3, the information processing device 100 has a central processing unit (CPU) 301, a memory 302, and a network interface (I/F) 303. The information processing device 100 also has a recording medium I/F 304, a recording medium 305, a display 306, and an input device 307. The components are connected to each other by a bus 300.

Here, the CPU 301 controls the entire information processing device 100. The memory 302 includes, for example, a read-only memory ( ROM ), a random-access memory ( RAM ), and a flash ROM. For example, the flash ROM and the ROM store various programs, and the RAM is used as a work area for the CPU 301. The programs stored in the memory 302 are loaded onto the CPU 301, causing the CPU 301 to execute encoded processes.

The network I/F 303 is connected to the network 210 through a communications line and is connected to other computers via the network 210. The network I/F 303 manages an internal interface with the network 210 and controls the input and output of data from other computers. The network I/F 303 is, for example, a modem or a LAN adapter.

The recording medium I/F 304 controls the reading and writing of data with respect to the recording medium 305 under the control of the CPU 301. The recording medium I/F 304 is, for example, a disk drive, a solid-state drive (SSD), a universal serial bus (USB) port, or the like. The recording medium 305 is a non-volatile memory that stores data written thereto under the control of the recording medium I/F 304. The recording medium 305 is, for example, a disk, a semiconductor memory, a USB memory, or the like. The recording medium 305 may be detachable from the information processing device 100.

The display 306 displays data such as a cursor, an icon, a toolbox, a document, an image, or function information. The display 306 is, for example, a cathode ray tube (CRT), a liquid crystal display, or an organic electroluminescence (EL) display. The input device 307 has keys for inputting characters, numbers, and/or various instructions, and inputs data. The input device 307 is, for example, a keyboard or a mouse. The input device 307 may be, for example, a touch panel type input pad or a numeric keypad.

In addition to the above-mentioned components, the information processing device 100 may have, for example, a camera. In addition to the above-mentioned components, the information processing device 100 may have, for example, a printer, a scanner, a microphone, or a speaker. In addition, the information processing device 100 may have, for example, multiple recording medium I/Fs 304 and recording media 305. In addition, the information processing device 100 may omit, for example, the display 306 or the input device 307. Also, the information processing device 100 may omit, for example, the recording medium I/F 304 and the recording medium 305.

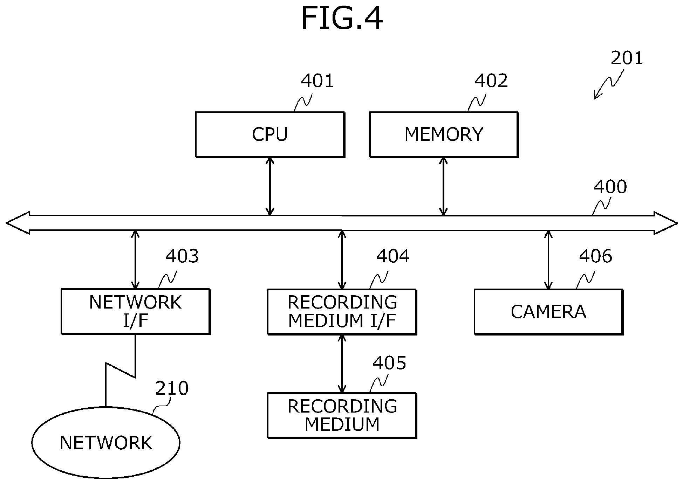

Next, an example of a hardware configuration of the imaging device 201 is described with reference to Fig. 4.

Fig. 4 is a block diagram depicting an example of a hardware configuration of the imaging device 201. In Fig. 4, the imaging device 201 has a CPU 401, a memory 402, a network I/F 403, a recording medium I/F 404, a recording medium 405, and a camera 406. The components are connected to each other by a bus 400.

Here, the CPU 401 is responsible for the overall control of the imaging device 201. The memory 402 includes, for example, a ROM, a RAM, and a flash ROM. For example, the flash ROM and the ROM store various programs, and the RAM is used as a work area for the CPU 401. The programs stored in the memory 402 are loaded onto the CPU 401, causing the CPU 401 to execute the encoded processes.

The network I/F 403 is connected to the network 210 through a communications line and is connected to other computers via the network 210. The network I/F 403 manages an internal interface with the network 210 and controls input and output of data from other computers. The network I/F 403 is, for example, a modem or a LAN adapter.

The recording medium I/F 404 controls the reading and writing of data with respect to the recording medium 405 under the control of the CPU 401. The recording medium I/F 404 is, for example, a disk drive, an SSD, a USB port, etc. The recording medium 405 is a non-volatile memory that stores data written thereto under the control of the recording medium I/F 404. The recording medium 405 is, for example, a disk, a semiconductor memory, a USB memory, etc. The recording medium 405 may be detachable from the imaging device 201.

The camera 406 has multiple image sensors and generates an image of a specific area by the multiple image sensors. For example, if a person is present in the specific area, the camera 406 generates an image in which the person is captured. For example, the camera 406 is a fixed-point camera. For example, the camera 406 may be movable. For example, the camera 406 is a surveillance camera.

In addition to the above-mentioned components, the imaging device 201 may have, for example, a keyboard, a mouse, a display, a printer, a scanner, a microphone, a speaker, and the like. Furthermore, the imaging device 201 may have multiple recording medium I/Fs 404 and recording media 405. Furthermore, the imaging device 201 may omit the recording medium I/Fs 404 and recording media 405.

The hardware configuration of the client device 202 is for example similar to the hardware configuration of the information processing device 100 depicted in Fig. 3 and thus, a description thereof is omitted.

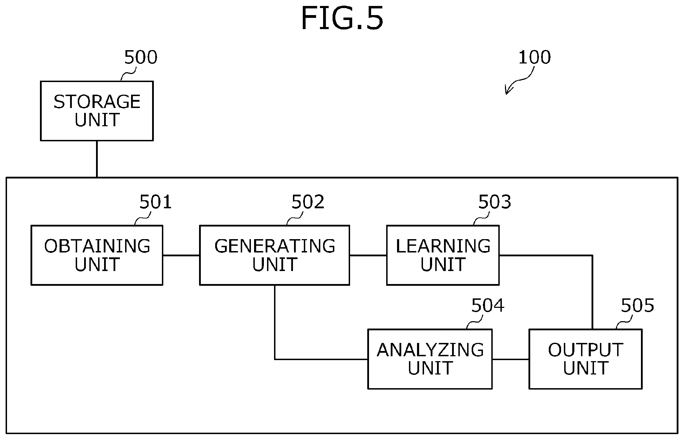

Next, an example of a functional configuration of the information processing device 100 is described with reference to Fig. 5.

Fig. 5 is a block diagram depicting an example of a functional configuration of the information processing device 100. The information processing device 100 includes a storage unit 500, an obtaining unit 501, a generating unit 502, a learning unit 503, an analyzing unit 504, and an output unit 505.

The storage unit 500 is implemented by, for example, a storage area such as the memory 302 or the recording medium 305 depicted in Fig. 3. In the following, while a case where the storage unit 500 is included in the information processing device 100 is described, configuration is not limited hereto. For example, the storage unit 500 may be included in a device different from the information processing device 100, and the stored contents of the storage unit 500 may be referred to by the information processing device 100.

The obtaining unit 501 to the output unit 505 function as an example of a control unit. For example, functions of the obtaining unit 501 to the output unit 505 are implemented by, for example, having the CPU 301 execute a program stored in a storage area such as the memory 302 or the recording medium 305 depicted in Fig. 3, or by the network I/F 303. The processing results of each functional unit are stored to a storage area such as the memory 302 or the recording medium 305 depicted in Fig. 3.

The storage unit 500 stores various information that is referred to or updated in the processing of each functional unit. The storage unit 500 stores, for example, multiple position data indicating the positions of each moving object on the area of interest at different times. The moving object is, for example, a person. The moving object may be, for example, a ship, a vehicle, an airplane, or a drone. The position data indicates the position of each moving object on the area of interest, for example, without identifying an individual. In the following description, a case is described where the moving object is a person. The position data indicates the position of each person on the area of interest, for example, without identifying an individual. For example, there may be multiple areas of interest.

The storage unit 500 for example stores multiple position data indicating the position of each person on the area of interest at different time points in each of one or more periods. The position data is obtained by, for example, the obtaining unit 501.

The storage unit 500 may store, for example, a correct answer obtained from results of analysis of the danger due to the congested state on the area of interest in each of one or more periods. The correct answer is, for example, the presence or absence of danger. The storage unit 500 may, for example, store, as the correct answer, information indicating the presence or absence of danger due to the congested state on the area of interest in each of one or more periods. The correct answer is obtained by, for example, the obtaining unit 501.

The storage unit 500 for example stores multiple position data indicating the position of each person on the area of interest at different time points in a predetermined period. The predetermined period is a period during which it is desired to analyze the danger due to the congested state on the area of interest. The position data is obtained by, for example, the obtaining unit 501.

The storage unit 500 stores, for example, a model that implements a function of outputting a result of analyzing a danger due to a crowded state in an area of interest according to input feature amount data that indicates spatial features in the area of interest. The result of analyzing the danger is, for example, a presence or absence of danger. The model is, for example, a neural network. The model may be, for example, a decision tree. The model may be, for example, a mathematical formula. For example, the model may be, for example, a mathematical formula that enables classification of a cluster of feature amount data corresponding to the presence of danger and a cluster of feature amount data corresponding to the absence of danger. The model is learned, for example, by the learning unit 503.

The obtaining unit 501 obtains various information used in the processing by each functional unit. The obtaining unit 501 stores the obtained information in the storage unit 500 or outputs the information to the functional units. The obtaining unit 501 may also output the various information stored in the storage unit 500 to the functional units. The obtaining unit 501 obtains the various information based on, for example, a user's operation input. The obtaining unit 501 may receive various information from, for example, a device other than the information processing device 100.

The obtaining unit 501 may obtain multiple position data indicating the positions of each person on the area of interest at different time points in each of one or more periods, for example. The obtaining unit 501 may, for example, obtain the multiple position data by receiving the multiple position data from another computer. The other computer is, for example, the imaging device 201. The obtaining unit 501 may, for example, obtain the multiple position data by receiving an input of the multiple position data.

The obtaining unit 501 may for example obtain an image of the area of interest captured at different time points in each of one or more periods. More specifically, the obtaining unit 501 obtains the image by receiving the image from the other computer. The obtaining unit 501 may for example obtain multiple position data indicating the positions of each person on the area of interest at different time points in each of one or more periods, for example, by analyzing the obtained image.

The obtaining unit 501 obtains a correct answer from results of analysis of a danger due to the congested state in an area of interest in each of one or more periods. The correct answer is, for example, the presence or absence of a danger. The obtaining unit 501 for example obtains the information by receiving, from another computer, for example, information indicating the presence or absence of a danger due to a congested state in an area of interest in each of one or more periods. The other computer is, for example, the client device 202. The obtaining unit 501 may for example obtain the information by receiving an input of information indicating the presence or absence of a danger due to a congested state in an area of interest in each of one or more periods.

The obtaining unit 501 obtains, for example, multiple position data indicating the positions of each person in the area of interest at different time points in a predetermined period. The obtaining unit 501, for example, obtains the multiple position data by receiving the multiple position data from another computer. The other computer is, for example, the imaging device 201. For example, the obtaining unit 501 may obtain multiple position data by receiving an input of multiple position data.

For example, the obtaining unit 501 may obtain images of an area of interest captured at different time points in a predetermined period of time. More specifically, the obtaining unit 501 obtains an image by receiving the image from another computer. For example, the obtaining unit 501 may obtain multiple position data indicating the positions of each person on the area of interest at different time points in a predetermined period by analyzing the obtained image.

The obtaining unit 501 may receive a start trigger for starting the processing of any of the functional units. The start trigger may be, for example, a predetermined operation input by a user. The start trigger may be, for example, a reception of predetermined information from another computer. The start trigger may be, for example, an output of predetermined information by any of the functional units.

For example, the obtaining unit 501 assumes the obtaining of multiple position data related to each of one or more periods to be a start trigger for starting the processing of the generating unit 502 and the learning unit 503. For example, the obtaining unit 501 assumes the obtaining of multiple position data indicating the positions of each person on the area of interest at different time points in a predetermined period to be a start trigger for starting the processing of the generating unit 502 and the analyzing unit 504.

The generating unit 502 generates feature amount data representing spatial features on the area of interest, based on the multiple position data obtained by the obtaining unit 501 through topological data analysis. The feature amount data is, for example, data based on PIs. For example, the generating unit 502 generates first feature amount data for each period based on the multiple position data for each period of one or more periods.

For example, the generating unit 502 generates a diagram based on the multiple position data obtained for each period. The diagram represents the timing at which each of one or more shapes of different types appears and disappears according to a change in resolution. For example, the diagram is a PD. Each of the one or more shapes is a shape that can be formed by a combination of the positions of people on the area of interest. For example, the one or more shapes include at least any one of a connecting shape, a ring shape, and a hollow shape that can be formed by a combination of the positions of people on the area of interest.

The generating unit 502 generates, for example, first feature amount data representing spatial features on the area of interest corresponding to the generated diagram, for each period. More specifically, the generating unit 502 generates a PI corresponding to the generated PD and generates first feature amount data corresponding to the generated PI. As described, the generating unit 502 can enable learning of a model that realizes a function of outputting a result of analyzing a danger due to a congested state on the area of interest, taking into account spatial features on the area of interest, and can improve the accuracy of the learned model.

The learning unit 503 learns a model based on the first feature amount data generated by the generating unit 502. For example, for each period, the learning unit 503 identifies a combination of the first feature amount data and a correct answer obtained from results of analysis of a danger due to a congested state on the area of interest during the period. The learning unit 503 learns a model by supervised learning, for example, based on the identified combination. The learning unit 503 may learn a model by unsupervised learning based on the first feature amount data, for example. As a result, the learning unit 503 can learn a model capable of accurately analyzing the danger due to the congested state in the area of interest, taking into account the spatial features in the area of interest.

The generating unit 502 generates second feature data related to a predetermined period, for example, based on multiple position data related to the predetermined period. For example, the generating unit 502 generates a diagram based on multiple position data obtained for a predetermined period. For example, the generating unit 502 generates second feature data representing spatial features in the area of interest corresponding to the generated diagram for the predetermined period. More specifically, the generating unit 502 generates a PI corresponding to a generated PD and generates second feature data corresponding to the generated PI. As a result, the generating unit 502 can enable utilization of a model incorporating the spatial features in the area of interest.

The analyzing unit 504 obtains a result of analyzing the danger of congestion in an area of interest in a predetermined period based on the second feature amount data generated by the generating unit 502, using the model learned by the learning unit 503. The analyzing unit 504 obtains a result of analyzing the danger of congestion in the area of interest in a predetermined period, for example, by inputting the second feature amount data into the model. As a result, the analyzing unit 504 can accurately analyze the danger of congestion in the area of interest in a predetermined period, using the model.

The output unit 505 outputs the processing result of at least one of the functional units. The output format is, for example, display on a display, print output to a printer, transmission to an external device via the network I/F 303, or storage to a storage area such as the memory 302 or the recording medium 305. As a result, the output unit 505 can notify the user of the processing result of at least one of the functional units and can support the management and operation of the information processing device 100 such as, for example, the updating of setting values of the information processing device 100, and can improve the convenience of the information processing device 100.

The output unit 505 transmits, for example, a result of an analysis of the danger of a congested state in an area of interest during a predetermined period, the analysis result being obtained by the analyzing unit 504 and transmitted to another computer. The other computer is, for example, the client device 202. The output unit 505 may output, for example, the result of analysis (by the analyzing unit 504) of the danger of a congested state in an area of interest during a predetermined period, so that the user can refer to the result. As described, the output unit 505 can make the danger due to the congested state in the area of interest during a predetermined period externally accessible.

The output unit 505 may output, for example, a model learned by the learning unit 503. For example, the output unit 505 transmits the model learned by the learning unit 503 to the other computer. The other computer is, for example, the client device 202. As described, the output unit 505 can enable external reference of the model capable of accurately analyzing the danger due to the congested state in the area of interest.

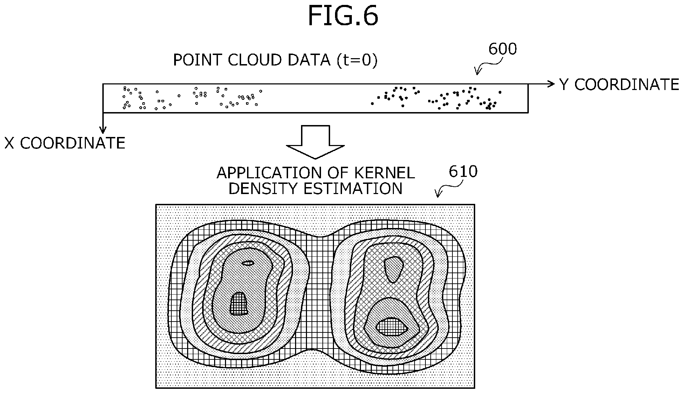

Next, an example of operation of the information processing device 100 is described with reference to Figs. 6 to 12.

Figs. 6, 7, 8, 9, 10, 11, and 12 are explanatory views depicting an example of operation of the information processing device 100. In Figs. 6 to 12, the information processing device 100 judges whether dangerous congestion has occurred in an area of interest. The area of interest is a two-dimensional plane onto which a three-dimensional space is projected excluding the height component. The two-dimensional plane includes an X axis and a Y axis. A position is a combination of an X coordinate and a Y coordinate.

Here, for example, when dangerous congestion occurs, a unique state may appear with respect to the spatial features of the area of interest and the continuity of the spatial features. For example, when an arch-shaped crowd occurs at a narrow part in the area of interest and dangerous congestion occurs, a unique state may appear in which the arch-shaped crowd is maintained over time and the range of the crowd spreads from the arch-shaped crowd as an origin. For this reason, it is considered that a state related to the spatial features of the area of interest and the continuity of the spatial features serves as a guide for judging whether dangerous congestion has occurred. On the other hand, it may be difficult to define spatial features in advance.

Thus, without tracking each person in the area of interest, the information processing device 100 learns, by topological data analysis, a state appearing in the spatial features on the area of interest and the continuity of the spatial features when dangerous congestion occurs, based on point cloud data indicating the position of the crowd. The information processing device 100 generates, by topological data analysis, for example, feature amount data reflecting the spatial features on the area of interest and the continuity of the spatial features, based on point cloud data indicating the position of the crowd. The information processing device 100 learns, for example, a model that implements a function of determining whether dangerous congestion has occurred, based on the generated feature amount data.

The model is, for example, a neural network. The model may be, for example, a decision tree. The model may be, for example, a mathematical formula. For example, the model may be a mathematical formula that enables classification of a cluster of feature amount data corresponding to the occurrence of dangerous congestion and a cluster of feature amount data corresponding to the absence of dangerous congestion. The model is learned, for example, by unsupervised learning. The model may be trained by, for example, supervised learning.

An example is described hereinafter in which the information processing device 100 determines whether dangerous congestion has occurred in an area of interest with reference to Figs. 6 to 12. First, the description with reference to Fig. 6 is given.

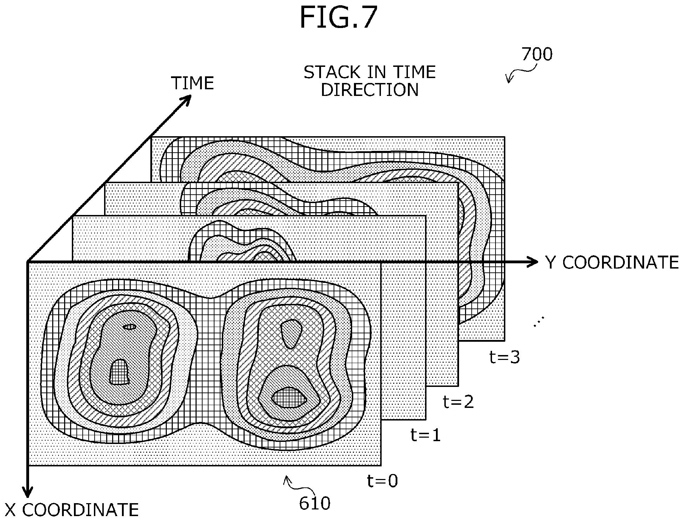

In Fig. 6, the information processing device 100 obtains point cloud data 600 corresponding to each time point in a first period. The point cloud data 600 indicates the position of a crowd on an area of interest at any time point. In the example of Fig. 6, the point cloud data 600 at time t=0 is depicted. The information processing device 100 applies kernel density estimation to the point cloud data 600 corresponding to each time point to generate 2D pixel data 610 corresponding to each time point. Next, the description is given with reference to Fig. 7.

In Fig. 7, the information processing device 100 generates 3D voxel data 700 corresponding to the first period by stacking the 2D pixel data 610 corresponding to each time point in the time direction. Thereby, the information processing device 100 can prepare 3D voxel data 700 that is the basis for analyzing the spatial features of the area of interest and the state of the continuity of the spatial features.

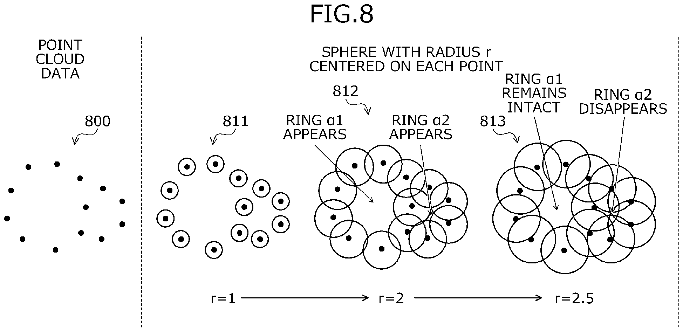

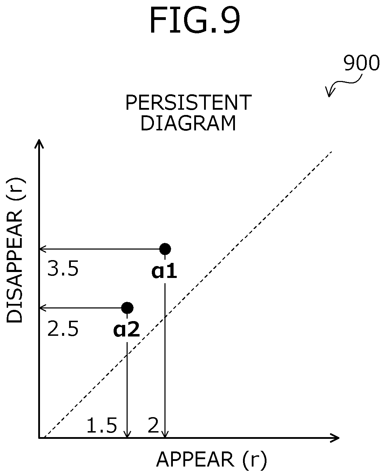

Next, the information processing device 100 generates a PD that represents the spatial features of the area of interest corresponding to the 3D voxel data 700 and the state of the continuity of the spatial features. The PD represents the timing at which each of one or more different types of shapes appears and disappears according to a change in resolution. Each of the one or more shapes is a shape that can be formed by a combination of the positions of people. Each of the one or more shapes is, for example, a shape that can be formed by a combination of spheres centered on the position of the person. For example, the one or more shapes include at least one of a connected shape, a ring shape, and a hollow shape. Here, an example of a PD is described with reference to Figs. 8 and 9.

In the example depicted in Fig. 8, a point cloud 800 is assumed. The information processing device 100 identifies the timing at which a ring shape that can be formed by a combination of spheres appears and disappears according to a change in resolution r for each point of the point cloud 800. The resolution r indicates an approximate size of the points, a size at which points are recognized. The resolution r is the radius of a sphere centered on each point. In the example of Fig. 8, as depicted by reference numerals 811 to 813, the ring α1 appears at r=2. As depicted by reference numerals 811 to 813, the ring α2 appears at r=2 and disappears at r=2.5.

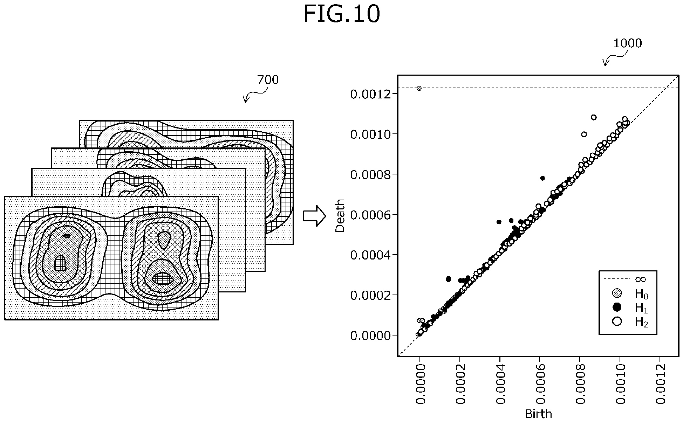

As depicted in Fig. 9, the information processing device 100 identifies the timings at which the shape of the ring appears and disappears according to the change in the resolution r and generates a PD 900 representing each timing. The horizontal axis of the PD 900 indicates the timing at which the ring appears. The vertical axis of the PD 900 indicates the timing at which the ring disappears. Here, the description is given with reference to Fig. 10.

As depicted in Fig. 10, the information processing device 100, for example, generates a PD 1000 corresponding to the 3D voxel data 700. The PD 1000 indicates the timing at which a connection shape appears and disappears, the timing at which a ring shape appears and disappears, and the timing at which a hollow shape appears and disappears.

H₀ corresponds to the connection shape. H₁ corresponds to the ring shape. H₂ corresponds to the hollow shape. Birth corresponds to appearance. Death corresponds to disappearance. Here, for the processing procedure for generating the PD 1000 based on the 3D voxel data 700, reference can be made to e.g., "Cubical Ripser: Software for Computing Persistent Homology of Image and Volume Data." by Shizuo Kaji, Takeki Sudo, and Kazushi Ahara, arXiv preprint arXiv: 2005.12692 (2020).

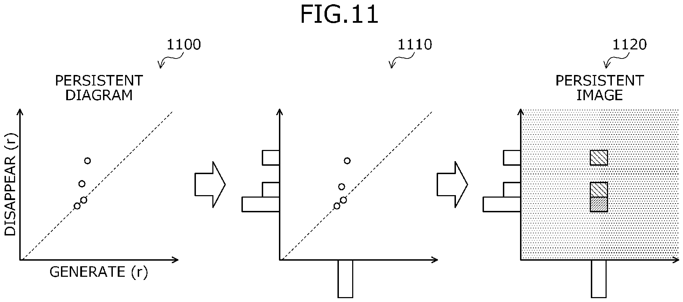

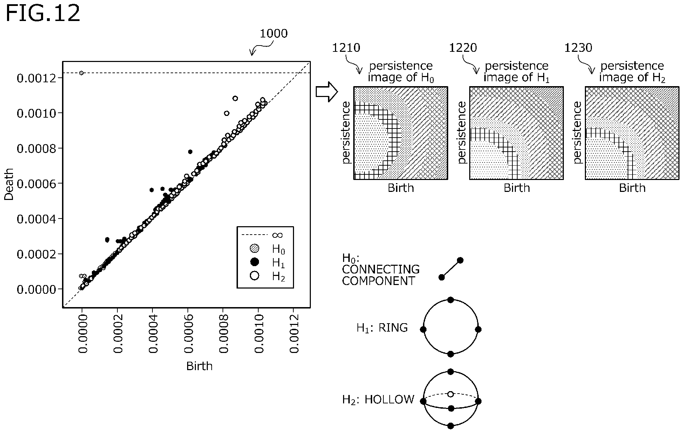

Next, description is given with reference to Figs. 11 and 12. In Figs. 11 and 12, the information processing device 100 generates a PI indicating a frequency distribution corresponding to the timing at which each of one or more different types of shapes in the generated PD 1000 appears and disappears. Here, an example of a PI is described with reference to Fig. 11.

As depicted in Fig. 11, it is assumed that a PD 1100 exists. Reference numeral 1110 indicates a frequency corresponding to the timing at which a ring shape corresponding to the PD 1100 appears and disappears. A PI 1120 indicates a frequency distribution corresponding to that indicated by reference numeral 1110. The information processing device 100 actually generates the PI 1120 from the PD 1100 using a distribution function, not via the histogram illustrated in 1110. Here, the description is given with reference to Fig. 12.

In the example depicted in Fig. 12, the information processing device 100, for example, generates a PI 1210 indicating a frequency distribution corresponding to the timing at which a connected shape appears and disappears in the generated PD 1000. For example, the information processing device 100 generates a PI 1220 indicating a frequency distribution corresponding to the timing at which the shape of a ring appears and disappears in the generated PD 1000. For example, the information processing device 100 generates a PI 1230 indicating a frequency distribution corresponding to the timing at which the shape of a hollow shape appears and disappears in the generated PD 1000.

The information processing device 100 generates a feature vector for the first period, based on the generated PIs 1210, 1220, and 1230. Similarly, the information processing device 100 generates a feature vector for each of one or more periods other than the first period. Based on the multiple feature vectors generated, the information processing device 100 learns a model by unsupervised learning or supervised learning to implement a function of determining whether dangerous congestion has occurred in an area of interest, according to the feature vector.

The information processing device 100 uses the learned model to determine whether dangerous congestion has occurred in an area of interest during a predetermined period. The information processing device 100 generates a feature vector for a predetermined period, based on point cloud data corresponding to each time point within the predetermined period. The information processing device 100, for example, inputs the generated feature vector into a learned model to determine whether dangerous congestion has occurred in an area of interest during a predetermined period.

The information processing device 100 outputs a result of determining whether dangerous congestion has occurred in an area of interest during a predetermined period. The information processing device 100 transmits, to the client device 202, for example, a result of determining whether dangerous congestion has occurred in an area of interest during a predetermined period. The information processing device 100 may output, for example, a result of determining whether dangerous congestion has occurred in an area of interest during a predetermined period so that the user can refer to the result.

As a result, the information processing device 100 can learn a model capable of properly determining whether dangerous congestion has occurred. For example, the information processing device 100 can learn a model capable of properly determining whether dangerous congestion has occurred by distinguishing between dangerous congestion and safe congestion, taking into account spatial features when dangerous congestion occurs, using the PD 1000.

Thus, the information processing device 100 can properly determine whether dangerous congestion has occurred, for example, regardless of the density of people in the area of interest. For example, even when the area of interest is a relatively large space or has a relatively complex shape, and the density of people in the area of interest is not uniform, the information processing device 100 can properly determine whether dangerous congestion has occurred.

For example, the information processing device 100 can properly determine whether dangerous congestion has occurred in a public space where people gather, which is actually a relatively large space or has a relatively complex shape. Furthermore, for example, even when the density of people in the area of interest is relatively high, the information processing device 100 can prevent erroneous determination that dangerous congestion has occurred when the flow of people is regular and only safe congestion has occurred.

For example, the information processing device 100 can properly determine whether dangerous congestion has occurred, without identifying individuals or tracking the movement of each person in the area of interest. For example, the information processing device 100 can eliminate the need to track the movement of people in an area of interest when determining whether dangerous congestion has occurred and can suppress an increase in processing time and/or processing load.

Thus, the information processing device 100 can facilitate the prevention of crowd accidents. For example, the information processing device 100 can properly determine whether dangerous congestion that leads to a crowd accident has occurred to prevent a crowd accident. The information processing device 100 can enable an administrator who manages safety in the area of interest, or an operator who actually manages the flow of people in the area of interest, to quickly grasp the occurrence of dangerous congestion that leads to a crowd accident. The information processing device 100 can enable the administrator, operator, or the like to easily take appropriate measures early on in response to an occurrence of dangerous congestion.

Furthermore, when safe congestion has occurred while dangerous congestion has not occurred, the information processing device 100 can eliminate the need to notify an administrator, operator, or the like of an alarm indicating the occurrence of dangerous congestion. Thus, the information processing device 100 can prevent an excessively high frequency of warnings to the manager or the worker. The information processing device 100 can suppress an increase in the physical or psychological workload on the manager or the worker. Furthermore, the information processing device 100 can prevent the manager or the worker from becoming psychologically inclined to disregard warnings.

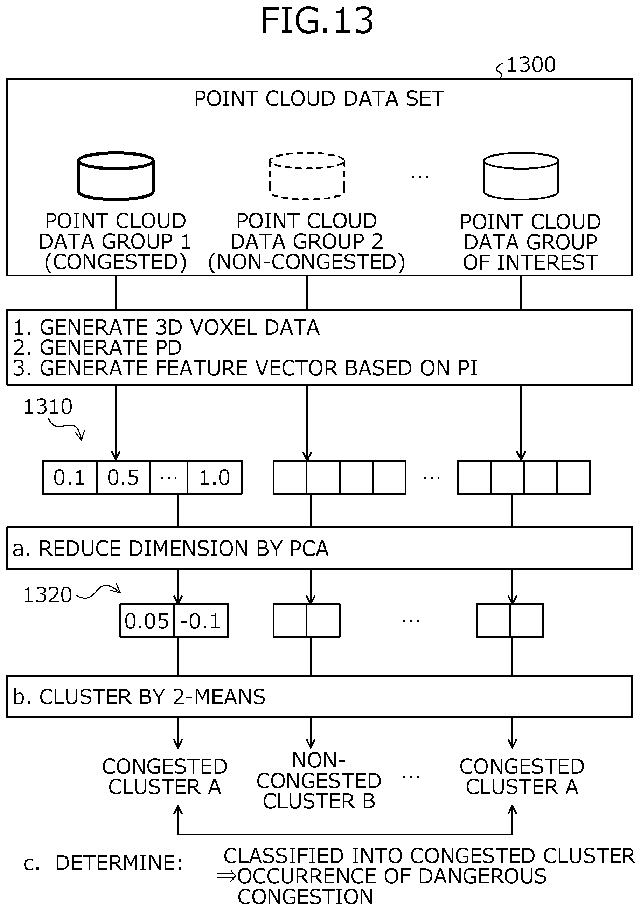

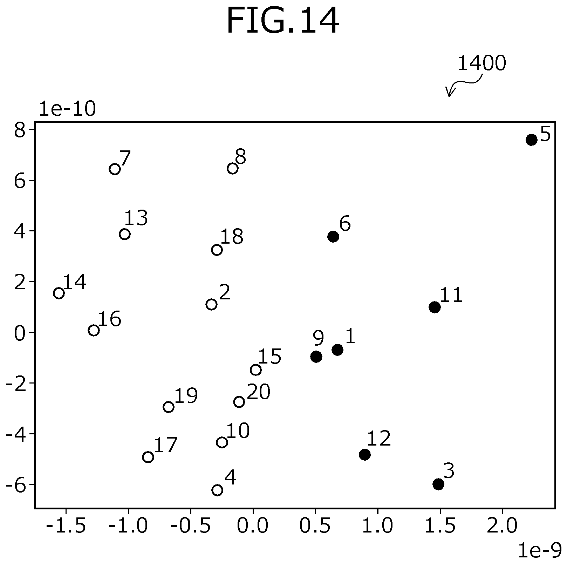

A specific example of the operation of the information processing device 100 is described with reference to Figs. 13 and 14.

Figs. 13 and 14 are explanatory views depicting a specific example of the operation of the information processing device 100. In Fig. 13, the information processing device 100 obtains a point cloud data set 1300 by receiving, from the imaging device 201, multiple point cloud data groups each relating to a different period. The multiple point cloud data groups include, for example, a point cloud data group 1 and a point cloud data group 2. The multiple point cloud data groups include, for example, point cloud data for which it is to be determined whether dangerous congestion has occurred for a predetermined period. The information processing device 100 obtains, for example, information indicating whether dangerous congestion has occurred in an area of interest in each different time period.

For each time period, the information processing device 100 generates 3D voxel data for a point cloud data group related to the time period. For each time period, the information processing device 100 generates a PD corresponding to the generated 3D voxel data. For each time period, the information processing device 100 generates a PI corresponding to the generated PD. For each time period, the information processing device 100 generates a feature vector 1310 based on the generated PI.

For each time period, the information processing device 100 generates a two-dimensional feature vector 1320 by reducing the dimension of the generated feature vector 1310 by principal component analysis (PCA). The information processing device 100 classifies multiple point cloud data groups into a congested cluster A and a non-congested cluster B by 2-means based on the generated feature vector 1320 for each period. Here, description is given with reference to Fig. 14.

White circles and black circles in the graph 1400 depicted in Fig. 14 indicate point cloud data groups projected onto a two-dimensional plane by PCA. The white circles correspond to point cloud data groups related to periods in which dangerous congestion does not occur. The black circles correspond to point cloud data groups related to periods in which dangerous congestion occurs. As described, the information processing device 100 can properly classify multiple point cloud data groups into a congested cluster A and a non-congested cluster B by taking spatial features into account via the PD.

Here, when the information processing device 100 classifies a point cloud data group of interest into the congested cluster A, it determines that dangerous congestion has occurred in the area of interest during the predetermined period. When the information processing device 100 classifies a point cloud data group of interest into non-crowded cluster B, it determines that no dangerous congestion has occurred in the area of interest during a predetermined period. When the information processing device 100 determines that dangerous congestion has occurred in the area of interest during a predetermined period, the information processing device 100 outputs an alarm indicating that dangerous congestion has occurred in the area of interest. The information processing device 100 transmits the alarm to the client device 202, for example.

As a result, the information processing device 100 can learn a model capable of properly determining that dangerous congestion has occurred. The information processing device 100 can learn a model capable of properly determining whether dangerous congestion has occurred by distinguishing between dangerous congestion and safe congestion, taking into consideration spatial features in the case where dangerous congestion occurs, for example, by a PD.

Thus, the information processing device 100 can, for example, properly determine whether dangerous congestion has occurred, regardless of the density of people on the area of interest. For example, the information processing device 100 can properly determine whether dangerous congestion has occurred, even when the area of interest is a relatively large space or has a relatively complex shape, and the density of people in the area of interest is not uniform.

The information processing device 100 can, for example, properly determine whether dangerous congestion has occurred in a public space where people gather, which is actually a relatively large space or has a relatively complex shape. Furthermore, even when the density of people in an area of interest is relatively large, the information processing device 100 can, for example, prevent erroneous determination that dangerous congestion has occurred when the flow of people is regular and only safe congestion has occurred.

The information processing device 100 can, for example, properly determine whether dangerous congestion has occurred without identifying individuals and without tracking the movement of each person in the area of interest. For example, the information processing device 100 need not track the movement of people in an area of interest when determining whether dangerous congestion has occurred and can suppress an increase in processing time and/or processing load.

Thus, the information processing device 100 can make it easier to prevent crowd accidents. The information processing device 100 can, for example, properly determine whether dangerous congestion that leads to crowd accidents has occurred to prevent crowd accidents. The information processing device 100 can enable a manager who manages safety in an area of interest or a worker who actually manages the flow of people in the area of interest to quickly grasp the occurrence of dangerous congestion that may lead to a crowd accident. The information processing device 100 can make it easier for a manager or a worker to take appropriate measures early on in response to an occurrence of dangerous congestion.

Furthermore, when safe congestion occurs while dangerous congestion does not occur, the information processing device 100 can avoid notifying a manager or a worker of an alarm indicating the occurrence of dangerous congestion. Thus, the information processing device 100 can prevent an excessive frequency of warnings from being issued to a manager or a worker. The information processing device 100 can suppress an increase in the physical or psychological workload imposed on a manager or a worker. Furthermore, the information processing device 100 can prevent a manager or a worker from becoming psychologically inclined to disregard warnings.

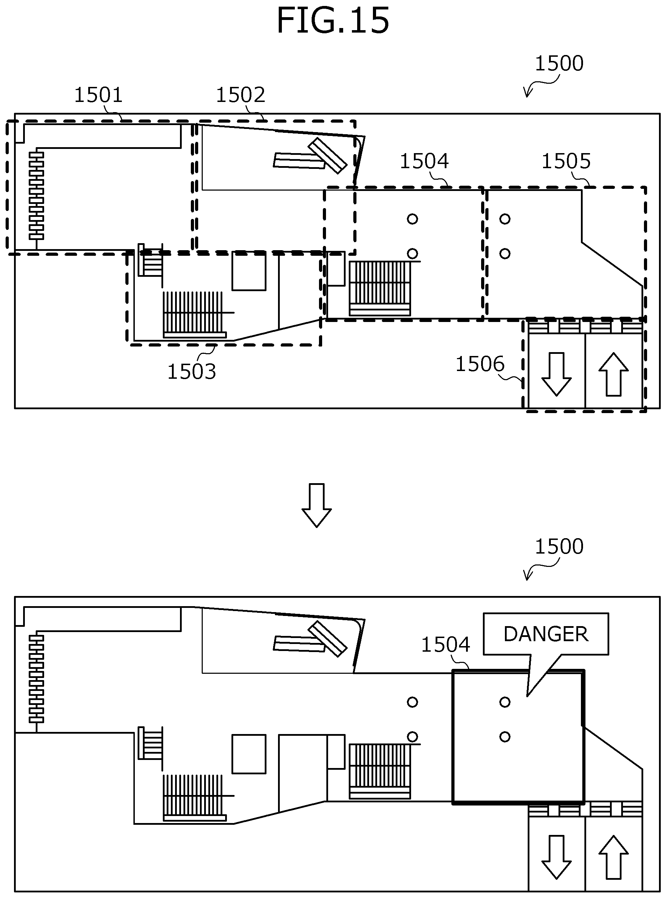

An example of an output screen is described with reference to Fig. 15.

Fig. 15 is an explanatory view depicting an example of an output screen. In Fig. 15, the information processing device 100 determines whether dangerous congestion has occurred in each of individual areas 1501 to 1506 based on a group of point cloud data received from the imaging devices 201 provided in each of the individual areas 1501 to 1506 of an entire area 1500.

Here, it is assumed that the information processing device 100 has determined that dangerous congestion has occurred in the individual area 1504. The information processing device 100 generates an output screen 1510 including a notification indicating that dangerous congestion has occurred in the individual area 1504, so that the individual area 1504 on the map of the entire area 1500 can be identified. The information processing device 100 transmits the generated output screen to the client device 202.

As a result, the information processing device 100 can easily prevent crowd accidents. For example, the information processing device 100 enables an administrator who manages safety in the entire area 1500, or an operator who actually manages the flow of people in the individual area 1504, to grasp the state of the individual area 1504 in which dangerous congestion that leads to a crowd accident has occurred. The information processing device 100, for example, enables an administrator or an operator to easily take appropriate measures early on in response to the dangerous congestion that has occurred.

Here, while a case has been described in which the information processing device 100 generates the output screen 1510, this is not limiting. For example, the information processing device 100 may transmit the result of determining that dangerous congestion has occurred in the individual area 1504 to the client device 202. In this case, when the client device 202 receives the result of determining that dangerous congestion has occurred in the individual area 1504 from the information processing device 100, the output screen 1510 is generated.

Another example of the output screen is described. The information processing device 100 may determine whether dangerous congestion has occurred in an area of interest in each of the multiple individual periods in a past overall period. An overall period is, for example, one day. The individual period is, for example, each hourly time period when the overall period is one day. The overall period may be, for example, one week. The individual period is, for example, each day of the week when the overall period is one week.

For example, the information processing device 100 may determine whether dangerous congestion has occurred in the area of interest in each hourly time period of one day. Then, for example, the information processing device 100 may generate an output screen in which the result of determining whether dangerous congestion has occurred in the area of interest in each time period is associated on a time axis for one day and may transmit the output screen to the client device 202.

For example, the information processing device 100 may determine whether dangerous congestion has occurred in the area of interest in each hourly time period of one day for each of the multiple days. The information processing device 100 may calculate the frequency of dangerous congestion occurring in the area of interest in each time period of a day based on the result of judging whether dangerous congestion has occurred in the area of interest. The information processing device 100 may generate an output screen in which the frequency of dangerous congestion occurring in the area of interest in each time period is associated with each other on a time axis for one day and may transmit the output screen to the client device 202.

As a result, the information processing device 100 to enable a manager who manages safety in the area of interest or a worker who actually manages the flow of people in the area of interest to understand in which time period of a day dangerous congestion is likely to occur in the area of interest. Thus, the information processing device 100 makes it easier for, for example, a manager or a worker to take appropriate measures early on for a time period when dangerous congestion is likely to occur.

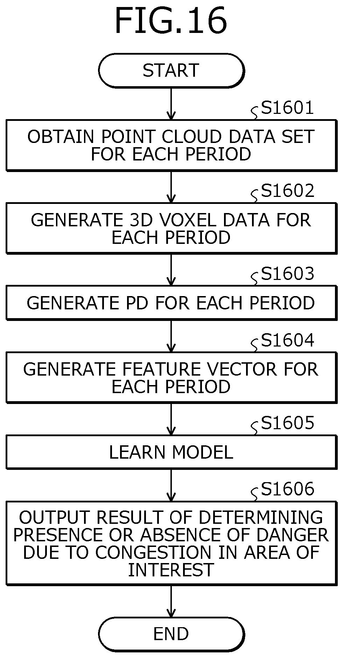

An example of an overall processing procedure executed by the information processing device 100 is described with reference to Fig. 16. The overall processing is implemented by, for example, the CPU 301 depicted in Fig. 3, a storage area such as the memory 302 or the recording medium 305, and the network I/F 303.

Fig. 16 is a flowchart depicting an example of the overall processing procedure. In Fig. 16, the information processing device 100 obtains a point cloud data set that compiles point cloud data indicating the positions of each person in a crowd present in an area of interest at each time point within each period including a predetermined period (step S1601).

The information processing device 100 applies kernel density estimation to each point cloud data of the obtained point cloud data set for each period and generates 3D voxel data by stacking the data in the time direction (step S1602). The information processing device 100 generates a PD corresponding to the generated 3D voxel data for each period (step S1603).

The information processing device 100 converts the generated PD into a PI for each period and generates a feature vector (step S1604). The information processing device 100 learns a model that implements a function of determining the presence or absence of danger due to congestion in the area of interest, based on the generated feature vector for each period other than the predetermined period (step S1605).

The information processing device 100 uses the learned model to determine the presence or absence of danger due to congestion in the area of interest based on the generated feature vector for a predetermined period of time, and outputs the result (step S1606). The information processing device 100 ends the entire process.

As described above, the information processing device 100 can obtain multiple position data indicating the positions of each moving object in the area of interest at different times. The information processing device 100 can generate a diagram that indicates the timing at which each shape of one or more shapes of different types appears and disappears depending on the change in resolution based on the multiple obtained position data by topological data analysis. The information processing device 100 can generate first feature amount data that indicates the spatial features on the area of interest corresponding to the diagram. According to the information processing device 100, it is possible to learn a model that outputs a result of analyzing the danger due to a crowded state in an area of interest according to the input feature amount data representing the spatial features of the area of interest based on the generated first feature amount data. This allows the information processing device 100 to properly analyze the danger due to the crowded state in the area of interest.

According to the information processing device 100, it is possible to use a person as a moving object. This allows the information processing device 100 to easily prevent a crowd accident.

According to the information processing device 100, it is possible to generate a diagram for one or more shapes including at least any one of a connected shape, a ring shape, and a hollow shape that may be formed by a combination of the positions of the moving objects on the area of interest. This allows the information processing device 100 to learn a model that can accurately analyze the danger due to the crowded state in the area of interest by properly considering the spatial features of the area of interest.

According to the information processing device 100, it is possible to obtain multiple position data indicating the positions of the moving objects on the area of interest at different time points in each of multiple periods, for each of the multiple periods. According to the information processing device 100, for each period, a diagram can be generated based on the obtained multiple position data by topological data analysis, depicting the timing at which each shape appears and disappears depending on the change in resolution. According to the information processing device 100, for each period, first feature amount data can be generated that depicts the spatial features of the area of interest corresponding to the diagram. This allows the information processing device 100 to prepare multiple first feature amount data to be used when learning the model and facilitates learning of the model with high accuracy.

According to the information processing device 100, a model can be learned based on a combination of the generated first feature amount data and the presence or absence of danger due to the congested state in the area of interest for each period. This allows the information processing device 100 to make it easier to learn the model with high accuracy by supervised learning.

According to the information processing device 100, multiple position data can be obtained that depict the positions of each moving object in the area of interest at different time points in a predetermined period. According to the information processing device 100, a diagram can be generated based on the obtained multiple position data by topological data analysis, depicting the timing at which each shape appears and disappears depending on the change in resolution. According to the information processing device 100, it is possible to generate second feature amount data representing spatial features on an area of interest corresponding to a diagram. According to the information processing device 100, it is possible to output a result of analyzing a danger due to a crowded state on an area of interest in a predetermined period based on the generated second feature amount data by utilizing a learned model. As a result, the information processing device 100 can accurately analyze a danger due to a crowded state on an area of interest in a predetermined period by utilizing a learned model.

According to the information processing device 100, it is possible to output a learned model. As a result, the information processing device 100 can make a model capable of accurately analyzing a danger due to a crowded state on an area of interest available externally.

The information processing method described in the present embodiment may be implemented by executing a prepared program on a computer such as a personal computer and a workstation. The information processing program described in the embodiments is stored on a non-transitory, computer-readable recording medium such as a hard disk, a flexible disk, a compact disk (CD)-ROM, a magneto-optical disk (MO), and a digital versatile disk (DVD), read out from the computer-readable medium, and executed by the computer. The program may be distributed through a network such as the Internet.

According to one aspect, it is possible to facilitate proper determination of an occurrence of dangerous congestion.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. An information processing program causing a computer to execute a process, the process comprising:
obtaining a plurality of position data indicating positions of moving objects on an area of interest at different time points;
generating first feature amount data representing spatial features on the area, the first feature amount data corresponding to a diagram generated by topological data analysis based on the obtained plurality of position data, the diagram representing a timing at which each of one or more different types of shapes that are formable by a combination of the positions of the moving objects on the area appears and disappears depending on a change in resolution; and
learning, based on the generated first feature amount data, a model that outputs a result of analyzing a danger brought about by a congested state on the area according to input feature amount data representing the spatial features on the area.

2. The information processing program according to claim 1, wherein the moving object is a human being.

3. The information processing program according to claim 2, wherein the one or more shapes include at least any one of a connecting shape, a ring shape, and a hollow shape that are formable by the combination of the positions of the moving objects on the area.

4. The information processing program according to claim 3, wherein
the obtaining includes obtaining, for each of a plurality of periods, the plurality of position data indicating the positions of the moving objects in the area at different time points in each of the plurality of periods, and
the generating includes generating, by topological data analysis for each of the periods, the first feature amount data representing spatial features on the area and corresponding to the diagram representing a timing at which each of the shapes appears and disappears depending on a change in resolution, based on the obtained plurality of position data.

5. The information processing program according to any one of claims 1 to 4, wherein the learning includes learning the model, based on a combination of the generated first feature amount data and the presence or absence of danger brought about by a congested state on the area, for each of the periods.

6. The information processing program according to any one of claims 1 to 4, causing the computer to execute the process further comprising:
generating, by topological data analysis, second feature amount data representing the spatial features on the area and corresponding to the diagram representing a timing at which each of the shapes appears and disappears depending on a change in resolution, based on the plurality of position data indicating the positions of the moving objects on the area at different time points in a predetermined period of time; and
outputting the result of the analysis of danger brought about by the congested state on the area during the predetermined period of time, based on the generated second feature amount data, using the learned model.

7. The information processing program according to any one of claims 1 to 4, causing the computer to execute the process further comprising outputting the learned model.

8. An information processing method executed by a computer, the method comprising:
obtaining a plurality of position data indicating positions of moving objects on an area of interest at different time points;
generating first feature amount data representing spatial features on the area, the first feature amount data corresponding to a diagram generated by topological data analysis based on the obtained plurality of position data, the diagram representing a timing at which each of one or more different types of shapes that are formable by a combination of the positions of the moving objects on the area appears and disappears depending on a change in resolution; and
learning, based on the generated first feature amount data, a model that outputs a result of analyzing a danger brought about by a congested state on the area according to input feature amount data representing the spatial features on the area.

9. An information processing device, comprising:
a memory (402); and
a processor (401) coupled to the memory, the processor configured to:
obtain a plurality of position data indicating positions of moving objects on an area of interest at different time points;
generate first feature amount data representing spatial features on the area, the first feature amount data corresponding to a diagram generated by topological data analysis based on the obtained plurality of position data, the diagram representing a timing at which each of one or more different types of shapes that are formable by a combination of the positions of the moving objects on the area appears and disappears depending on a change in resolution; and
learn, based on the generated first feature amount data, a model that outputs a result of analyzing a danger brought about by a congested state on the area according to input feature amount data representing the spatial features on the area.
